# EUROPEAN PATENT SPECIFICATION

(11) **EP 1 452 427 B1**
(45) Date of publication and mention of the grant of the patent: **01.02.2006**
(21) Application number: 04100795.6
(22) Date of filing: 01.03.2004
(51) Int. Cl.: B62D 33/023

(54) **Clamping device to clamp closing elements, such as containing side panels of motor vehicles**
Spanneinrichtung zur Befestigung von Schliesselementen, wie Bordwände von Kraftfahrzeugen
Dispositif de serrage pour serrer des éléments de fermeture tels que des panneaux latéraux de véhicules à moteur

(30) Priority: 28.02.2003 IT UD20030045
(43) Date of publication of application: 01.09.2004
(73) Proprietor: ANTONELLI Fabio, 20064 GORGONZOLA (MI) (IT)
(72) Inventor: ANTONELLI Fabio, 20064 GORGONZOLA (MI) (IT)
(74) Representative: Petraz, Gilberto Luigi

(56) References cited:
- DE-A- 4 239 599
- DE-A- 10 122 098

## Description

### FIELD OF THE INVENTION

The present invention concerns a clamping device to clamp together two closing elements, such as for example a pair of containing side panels of a motor vehicle, or another means of transport, a pair of wings or panels or suchlike. The clamping device comprises a movement mechanism able to be associated with one of the two closing elements, and a box-like body able to be associated with the other closing element. The movement mechanism is also associated with an attachment element, which is able to be attached to the box-like body to obtain the clamping of the two closing elements.

### BACKGROUND OF THE INVENTION

A clamping device is known, able to be associated with the flatbed of a motor vehicle, or another means of transport, to selectively clamp a first containing side panel onto a second adjacent side panel. Such a clamping device is described in DE 42 39 599. The known clamping device is arranged in a housing seating accessible from outside by means of an aperture made in an end zone of the first side panel. The known device comprises a lever mechanism, which is provided with a handle that can be driven manually from outside. The lever mechanism is also connected to an attachment pin, which is able to be inserted into a mating eyelet made on the second side panel.

The lever mechanism is movable between a closed position, wherein the pin is in a clamped position in the relative eyelet, and a release position, wherein the pin is raised in correspondence with a widened segment of the eyelet and is free from all clamping constraint.

In the open position, the known lever mechanism is completely outside the first side panel with the handle lowered, leaving the housing seating exposed.

A first disadvantage of the known clamping device is that, once lowered, the handle is often left by the user in that position, through carelessness or negligence. In this condition, the handle not only creates an unwanted bulk, but is exposed to the risks of knocks, and consequent damage. To be more exact, if the side panel is opened outwards, after release, the handle can be ruined, knocking uncontrollably against the lower zone of the motor vehicle, and can also damage the part of the motor vehicle which it knocks.

Another disadvantage of the known clamping device is that the outward opening of the handle leaves the housing seating exposed, exposing it to dust, dirt or various detritus, which can damage the lever mechanism.

Another disadvantage of the known clamping device is that, to replace only a single component of the lever mechanism, the whole mechanism has to be dismantled and removed from the relative housing seating, with consequent excessive waste of time and high costs.

Purpose of the present invention is to achieve a clamping device to clamp a first closing element with a second closing element, such as for example a pair of containing side panels of a motor vehicle, or another means of transport, a pair of panels, wings or suchlike, wherein the actuation mechanism occupies minimum space, or can be associated with the closing elements themselves, without leaving any element protruding especially from the closing element that has to be moved.

Another purpose of the present invention is to provide that, even in the release condition of the two closing elements, the housing seating where the actuation mechanism is arranged is never left open towards the outside.

Another purpose of the present invention is to achieve a clamping device which is easily driven, which does not require excessive efforts on the part of the users and which, at the same time, guarantees a high level of safety and is not able to open accidentally.

Another purpose of the present invention is to achieve a clamping device wherein the individual components can be easily dismantled and removed from the housing seating to perform possible repairs or substitution.

Applicant has devised, tested and embodied the present invention to overcome the aforesaid shortcomings of the state of the art and to obtain these and other purposes and advantages.

### SUMMARY OF THE INVENTION

The present invention is set forth and characterized in the main claim, while the dependent claims describe other innovative characteristics of the invention.

A clamping device according to the present invention, to selectively clamp a first closing element onto a second closing element, comprises attachment means movable between a clamping position and a release position under the action of actuation means that can be driven manually. The actuation means comprise at least a first actuation element associated with the attachment means and arranged inside a housing seating associated with the first or second closing element. The first actuation element is movable axially inside the housing seating between a first closed position, to which corresponds the clamping position of the attachment means, and an open position, to which corresponds the release position of the attachment means, or vice versa. First elastic means are provided to exert an axial thrust on said first actuation element to thrust it constantly towards said open position.

In this way, thanks to the axial movement, both in the open position and also in the closed position, the first actuation element is substantially in line with the closing element with which it is associated, not protruding, except minimally, beyond its bulk.

In a preferential embodiment, the housing seating has an aperture able to allow the partial emergence outside of the first actuation element in the open position. The first actuation element comprises, for example, a button which, in the open position, partly comes out from the aforesaid aperture so as to close the housing seating itself and protect it from possible dust, detritus and dirt. On the contrary, when it is in the closed position, the button is pressed towards the inside of the housing seating.

In a preferential embodiment, the actuation means comprise a second actuation element connected to the first actuation element and able to command the movement of the latter from the closed position to the open position.

In a first embodiment, the second actuation element comprises a command rod, which is provided with stopping means able to selectively keep the first actuation element in the closed position, against the action of the first elastic thrust means.

According to a variant, the second actuation element comprises a second button, able to cooperate with second elastic thrust means. The second button is movable in a direction substantially orthogonal to the axial direction of the first actuation element, between an inactive position wherein it clamps the latter in the closed condition, and an operating position wherein it is pressed against the second elastic thrust means and allows the first actuation element to move to the open position.

### BRIEF DESCRIPTION OF THE DRAWINGS

These and other characteristics of the present invention will become apparent from the following description of some preferential forms of embodiment, given as a non-restrictive example with reference to the attached drawings wherein:
- fig. 1 is a view from above of a clamping device according to the present invention, in the closed condition;
- fig. 2 is a longitudinal section of the clamping device in fig. 1;
- fig. 3 is a longitudinal section of the device in fig. 1 in the release condition;
- fig. 4 is a partial section along the line from IV to IV of fig. 2;
- fig. 5 shows a first variant of fig. 2;
- fig. 6 is a schematic side view, partly in section, of fig. 5;
- fig. 7 shows a detail of fig. 6;
- fig. 8 shows a detail of a second variant of fig. 2;
- fig. 9 shows the device in fig. 8 in the release condition;
- fig. 10 shows a detail of a third variant of fig. 2;
- fig. 11 shows the device in fig. 10 in the release condition;
- fig. 12 is a partial section along the line XII to XII of fig. 10.

### DETAILED DESCRIPTION OF SOME PREFERENTIAL FORMS OF EMBODIMENT OF THE INVENTION

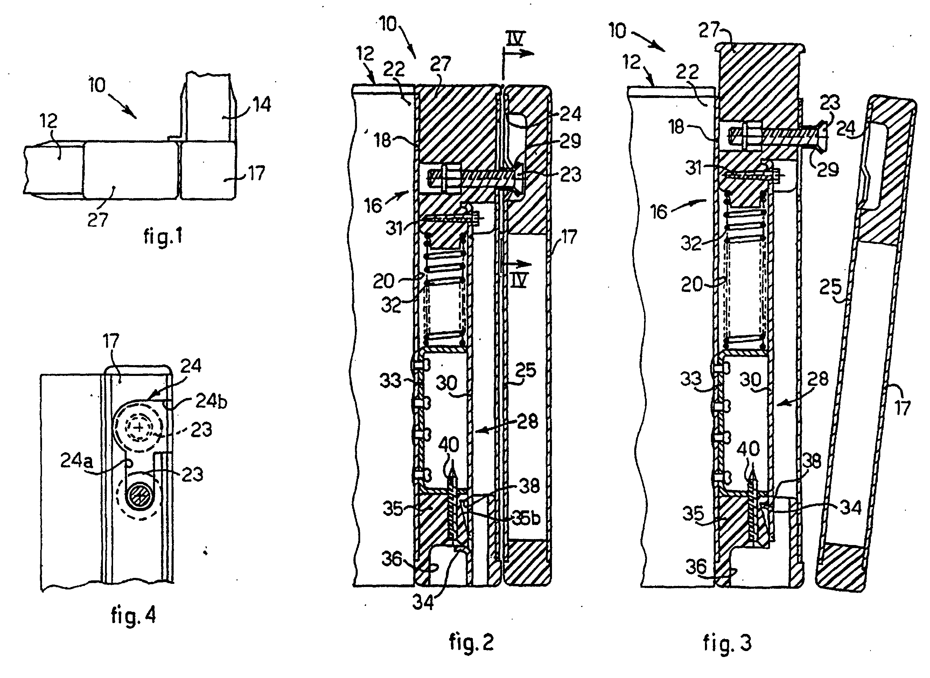

With reference to fig. 1, a clamping device 10 according to the present invention is able to clamp a first closing element 12 onto a second closing element 14.

The two closing elements can be, for example, the two containing or protecting side panels 12, 14 of the body of a motor vehicle, or another means of transport, not shown in the drawings.

The clamping device 10 (figs. 2 and 3) comprises an actuation mechanism 16, attached to the side panel 12 and a box-like assembly 17, attached to the side panel 14.

To be more exact, the actuation mechanism 16 is arranged substantially inside a housing seating 20 made, for example, in a box-like metal profile 18 attached in correspondence with a terminal zone 22 of the first side panel 12. To be more exact, the housing seating 20 is through and extends vertically for the whole height of the first side panel 12. The housing seating 20 is hence substantially closed at the sides.

The clamping device 10 comprises an attachment element 23, consisting for example of a pin or screw, able to be inserted in the clamping condition into an eyelet 24 (figs. 2, 3, 4) made on a lateral wall 25 of the box-like assembly 17.

The actuation mechanism 16 also comprises a first actuation element, which in this case consists of a first button like a stopper 27, able to slide axially in the housing seating 20, and on which the attachment element 23 is mounted.

To be more exact, the first stopper 27 is movable axially between a closed position (fig. 2), which corresponds to a clamping position of the attachment element 23 on the eyelet 24, and hence of the two side panels 12 and 14, and in which it is completely inside the housing seating 20, and an open position (fig. 3) wherein it partly comes out above the box-like profile 18, taking the attachment element 23 to the release condition.

In this way, if the first side panel 12 is tilted, there is no risk of the first stopper 27 knocking uncontrollably under the flatbed of the motor vehicle, damaging itself.

The eyelet 24 (fig. 4) has a substantially known shape and comprises at the lower part a slit 24a, able to constrain the attachment element 23 when it is in the clamping position, and at the upper part comprises a wider portion 24b able to allow the attachment element 23 to be unattached for release.

A bushing 29 is mounted coaxial with the attachment element 23 functioning as a bearing and as a protective element against wear during the clamping/release steps. In this way, the attachment element 23 never touches the edges of the eyelet 24 because the bushing 29 is interposed.

A first thruster spring 32, with a force equal to several hundred Newtons, is arranged between the first stopper 27 and a shaped supporting bar 33, attached to the box-like profile 18, and is able to thrust the first stopper 27 towards the open position and to be compressed by the first stopper 27 itself, when the latter is in said closed position.

The travel of the first stopper 27 towards the open position is commanded by means of a second actuation element 28 which in this case comprises a flexible rod 30 (figs. 2 and 3), made of harmonic steel, with the upper end fixed, by means of a screw 31, to the first stopper 27 below the attachment element 23.

The flexible rod 30 extends as far as the lower zone of the housing seating 20, so that it is easily accessible by a user from the lower side of the first side panel 12.

In the lower zone of the flexible rod 30 a fin 34 is made in one piece, bent towards the inside of the housing seating 20 and able to cooperate with the lower side of a second stopper 35, in correspondence with a positioning screw 40. The second stopper 35 closes the housing seating 20 at the bottom and has an open cavity 36.

The fin 34 is able to keep the flexible rod 30 under tension, and hence to keep the first stopper 27 in a closed condition, against the action of the first spring 32.

In order to release the device 10, it is enough to act with one finger in the cavity 36 and displace laterally, in this case towards the right, the lower end of the flexible rod 30, until the fin 34 no longer interferes with the positioning screw 40 and frees the first spring 32 from compression.

In this condition, the first spring 32 thrusts the first stopper 27 upwards, in a substantially vertical direction, and consequently also the flexible rod 30, until the fin 34 interferes with a shoulder 38 made in the second stopper 35 below the shaped bar 33.

The second stopper 35 has on the side 35b facing the flexible rod 30 an inclined plane able to guide the positioning of the fin 34 against the shoulder 38.

To reposition the clamping device 10 in its initial position and again clamp the first side panel 12 onto the second side panel 14, the first stopper 27 is pressed and the flexible rod 30 is lowered until the fin 34 interferes again with the positioning screw 40 against the action of the first spring 32.

The more or less lowered position of the positioning screw 40 allows to adjust the axial travel of the first stopper 27 between the aforesaid closed and open positions and hence to adjust the positioning of the attachment element 23 with respect to the eyelet 24 and to compensate possible erroneous alignments of the first side panel 12 with the second side panel 14.

It should be noted that all the components of the clamping device 10 as described heretofore, such as the first stopper 27 and the second stopper 35, the first spring 32 and the flexible rod 30, can easily be dismantled and removed from the housing seating 20 for possible replacement, without having to change the whole device 10 itself.

It is clear, however that modifications and/or additions of parts may be made to the clamping device 10 as described heretofore, without departing from the field and scope of the present invention.

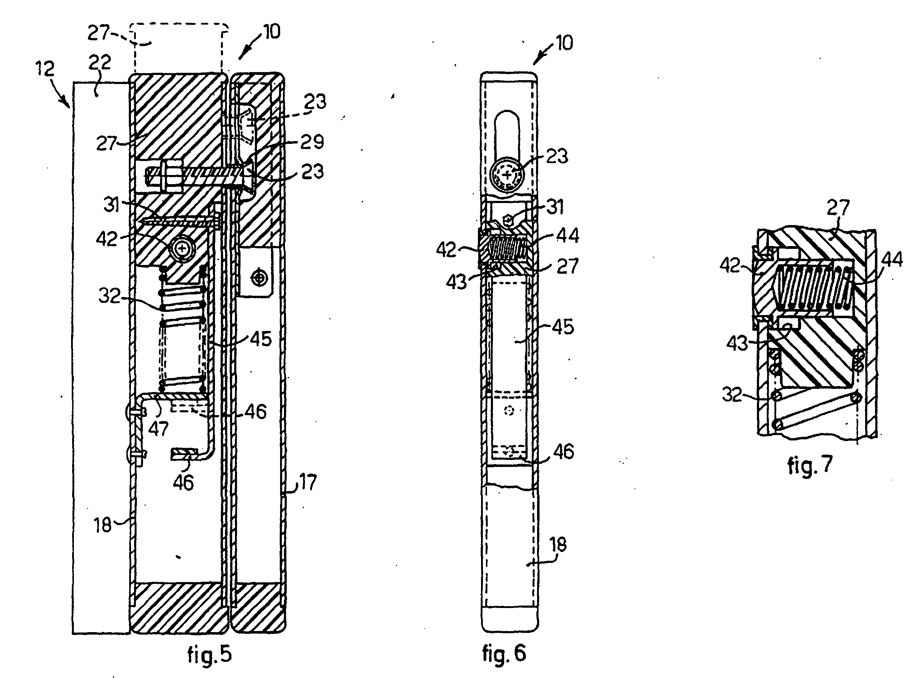

According to a variant shown in figs. 5, 6 and 7, instead of the flexible rod 30 there is a button 42, able to slide inside a cavity 43 made in the lower zone of the first stopper 27 where a second spring 44 is arranged.

The second spring 44 normally thrusts the button 42 outside the box-like profile 18 to maintain the stopper 27 in the closed position with a stopping function. By pressing the button 42 inside the cavity 43, the first stopper 27 is freed from the constraint of the button 42, allowing it to move towards the open position under the thrust of the first spring 32.

Moreover, a rod 45 is attached in the lower zone of the first stopper 27 and has one end 46 which is bent towards the inside and is able to cooperate, with an end-of-travel function, with a supporting bar 47 to stop the first stopper 27 in the open position.

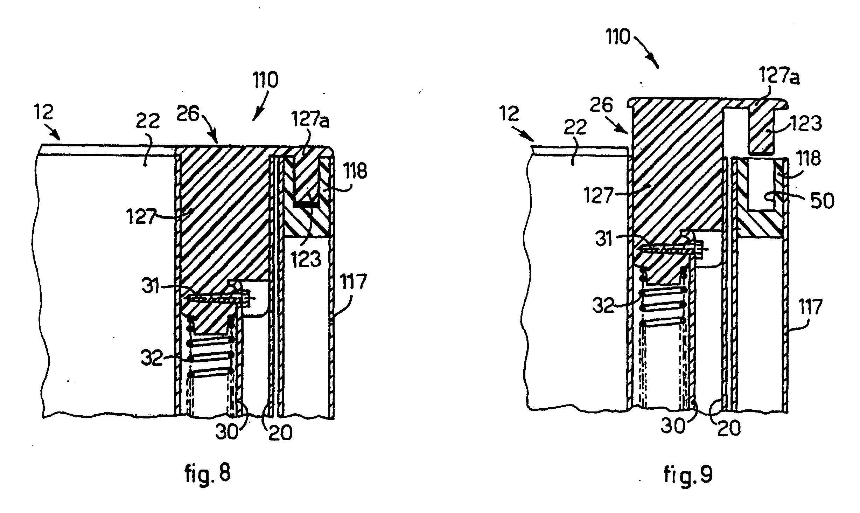

According to another variant (figs. 8 and 9), a clamping device 110, substantially similar to the device 10 shown heretofore, comprises an attachment element 123, which instead of horizontally, as in the previous solution, is arranged vertically and is able to be inserted in a mating hole 50 made in a stopper 118 of a box-like assembly 117.

The first stopper 127 has a lateral winglet 127a below which the attachment element 123 is made in one piece. In this case too, as already described, the first stopper 127 is able to cooperate with the first spring 32 to be thrust constantly upwards towards the open position outside the hole 50 (fig. 9).

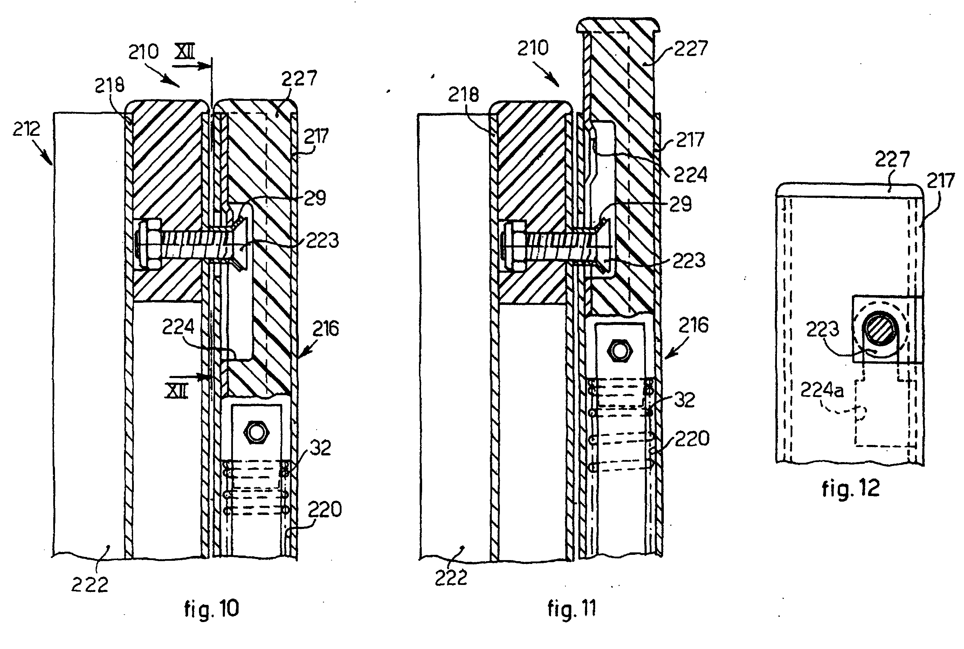

According to another variant shown in figs. 10-12, a clamping device 210 according to the present invention comprises an actuation mechanism 216, which is able to slide axially in a relative housing seating 220.

The housing seating 220 is made in a first box-like profile 217, which is able to be attached to a first side panel, not visible in the drawings.

The clamping device 210 also comprises a second box-like profile 218, able to be attached to one end 222 of a second side panel 212. An attachment element 223 is associated in fixed manner to the second box-like profile 218.

The actuation mechanism 216 comprises a first stopper 227 which acts as a first actuation element and in which, unlike in the embodiments shown before, an eyelet 224 is made, able to cooperate with the attachment element 223.

The eyelet 224 (fig. 12) comprises, with a configuration that is upside-down with respect to the embodiment described before, at the upper part, a slit 224b which constrains the attachment element 223 and, at the lower part, a wider portion 224a, able to allow the attachment element 223 to come out.

In this embodiment too, the stopper 227 is movable axially under the thrust of the first spring 32 between an open position, wherein it comes out above the first box-like profile 217 (fig. 11), freeing the eyelet 224 from the attachment element 223, and a closed position (fig. 10), wherein it is pressed in the housing seating 220, constraining the eyelet 224 to the attachment element 223.

## Claims

1. Clamping device to selectively clamp a first closing element (12) onto a second closing element (14), comprising attachment means (23) movable between a clamping position and a release position under the action of manually activable actuation means, **characterized in that** said actuation means comprise at least a first actuation element (27) associated with said attachment means (23) and arranged inside a housing seating (20) associated with said first (12) or second (14) closing element, **in that** said first actuation element (27) is movable axially inside said housing seating (20) between a first closed position, to which corresponds said clamping position of said attachment means (23), and an open position, to which corresponds said release position of said attachment means (23), or vice versa, and **in that** first elastic means (32) are provided in order to exert an axial thrust on said first actuation element (27) to thrust it constantly towards said open position.

2. Clamping device as in claim 1, **characterized in that** said housing seating (20) has at least an aperture able to allow the at least partial emergence of said first actuation element (27) in said open position, and **in that** said first actuation element comprises a button (27) that comes out from said housing seating (20) in said open position and is inside said housing seating (20) in said closed position.

3. Clamping device as in claim 1 or 2, **characterized in that** said actuation means comprise a second actuation element (30, 42) connected to said first actuation element (27) and able to command the movement of said first actuation element (27) from said closed position to said open position or vice versa.

4. Clamping device as in claim 3, **characterized in that** said housing seating (20) is through and passes through said first (12) or said second (14) closing element, and has a second aperture able to allow access to said second actuation element (30).

5. Clamping device as in claim 3 or 4, **characterized in that** said second actuation element comprises a command rod (30) provided with stopping means (34) able to cooperate with a fixed contrasting element (40), said command rod (30) being movable between a first position, wherein said stopping means (34) keep said first actuation element (27) stably in said closed position against the action of said first elastic means (32), and a second position, wherein said stopping means (34) are free of constraint with said contrasting element (40), allowing the movement of said first actuation element (27) towards said open position.

6. Clamping device as in claim 5, **characterized in that** the position of said contrasting element (40) is able to be selectively regulated in order to adjust the axial travel of said first actuation element (27).

7. Clamping device as in claim 3, **characterized in that** said second actuation element comprises a button (42) able to cooperate with second elastic means (44) and movable between a first inactive position, wherein it is able to constrain said first actuation element (27) in said closed position, and an operating position, wherein it is able to be pressed against said second elastic means (44) freeing the constraint with said first actuation element (27).

8. Clamping device as in any claim hereinbefore, **characterized in that** said attachment means comprise an element (23, 123) associated with said first actuation element (27, 127) and able to be inserted in a fixed eyelet (24, 50) associated respectively with said second (14) or said first (12) closing element.

9. Clamping device as in claim 8, **characterized in that** said element (23) is arranged in a position substantially orthogonal to the axis of movement of said first actuation element (27).

10. Clamping device as in claim 8, **characterized in that** said element (123) is arranged in a position substantially parallel to the axis of movement of said first actuation element (127).

11. Clamping device as in any claim from 1 to 7 inclusive, **characterized in that** said attachment means comprise an eyelet (224) made in said first actuation element and able to cooperate with a fixed attachment element (223) associated respectively with said first (12) or said second (14) closing element.

## Patentansprüche

1. Spanneinrichtung zum selektiven Befestigen eines ersten Schließelementes (12) an einem zweiten Schließelement (14) mit Befestigungsmitteln (23), die unter dem Einwirken von manuell aktivierbaren Betätigungsmitteln zwischen einer Befestigungsstellung und einer Freigabestellung bewegbar sind, **dadurch gekennzeichnet, dass** die Betätigungsmittel wenigstens ein erstes Betätigungselement (27) aufweisen, das mit den Befestigungsmitteln (23) verbunden und innerhalb eines Sitzgehäuses (20) angeordnet ist, das mit dem ersten Schließelement (12) oder mit dem zweiten Schließelement (14) verbunden ist, dass das erste Betätigungselement (27) innerhalb des Sitzgehäuses (20) zwischen einer ersten geschlossenen Stellung, die der Befestigungsstellung der Befestigungsmittel (23) entspricht, und einer geöffneten Stellung, die der Freigabestellung der Befestigungsmittel (23) entspricht, oder umgekehrt axial bewegbar ist, und dass erste elastische Mittel (32) vorhanden sind, um auf das erste Betätigungselement (27) einen Axialdruck auszuüben, um es kontinuierlich in Richtung der geöffneten Stellung zu drücken.

2. Spanneinrichtung nach Anspruch 1, **dadurch gekennzeichnet, dass** das Sitzgehäuse (20) wenigstens eine Ausnehmung aufweist, die dazu eingerichtet ist, den wenigstens teilweisen Austritt des ersten Betätigungselementes (27) in die geöffnete Stellung zu gestatten, und dass das erste Betätigungselement über einen Knopf (27) verfügt, der in der geöffneten Stellung aus dem Sitzgehäuse (20) austritt und in der geschlossenen Stellung innerhalb des Sitzgehäuses (20) angeordnet ist.

3. Spanneinrichtung nach Anspruch 1 oder 2, **dadurch gekennzeichnet, dass** die Betätigungsmittel über ein zweites Betätigungselement (30, 42) verfügen, das mit dem ersten Betätigungselement (27) verbunden und dazu eingerichtet ist, die Bewegung des ersten Betätigungselementes (27) von der geschlossenen Stellung in die offene Stellung oder umgekehrt zu steuern.

4. Spanneinrichtung nach Anspruch 3, **dadurch gekennzeichnet, dass** das Sitzgehäuse (20) innerhalb des ersten Schließelementes (12) oder des zweiten Schließelementes (14) angeordnet ist beziehungsweise durch dieses durchtritt und über eine zweite Ausnehmung verfügt, die dazu eingerichtet ist, den Zugang zu dem zweiten Betätigungselement (30) zu gestatten.

5. Spanneinrichtung nach Anspruch 3 oder 4, **dadurch gekennzeichnet, dass** das zweite Betätigungselement über einen mit Anschlagmitteln (34) ausgestatteten Steuerstab (30) verfügt, die dazu eingerichtet sind, mit einem feststehenden Gegenelement (40) zusammenzuwirken, wobei der Steuerstab (30) zwischen einer ersten Stellung, in der die Anschlagmittel (34) das erste Betätigungselement (27) stabil in der geschlossenen Stellung gegen die Einwirkung des ersten elastischen Mittels (32) halten, und einer zweiten Stellung bewegbar ist, in der die Anschlagmittel (34) frei von der Einwirkung des Gegenelementes (40) sind, so dass die Bewegung des ersten Betätigungselementes (27) in Richtung der geöffneten Stellung möglich ist.

6. Spanneinrichtung nach Anspruch 5, **dadurch gekennzeichnet, dass** die Stellung des Gegenelementes (40) dazu eingerichtet ist, selektiv einstellbar zu sein, um den axialen Verschiebeweg des ersten Betätigungselementes (27) einzustellen.

7. Spanneinrichtung nach Anspruch 3, **dadurch gekennzeichnet, dass** das zweite Betätigungselement über einen Knopf (42) verfügt, der dazu eingerichtet ist, mit zweiten elastischen Mitteln (44) zusammenzuwirken und zwischen einer ersten inaktiven Stellung, in der es möglich ist, das erste Betätigungselement (27) in die geschlossene Stellung zu zwingen, und einer betriebsbereiten Stellung zu bewegen, in der es möglich ist, gegen die zweiten elastischen Mittel (44) zu drücken, um es von der Einwirkung des ersten Betätigungselementes (27) zu befreien.

8. Spanneinrichtung nach einem der vorangehenden Ansprüche, **dadurch gekennzeichnet, dass** die Befestigungsmittel ein Element (23, 123) aufweisen, das mit dem ersten Betätigungselement (27, 127) verbunden und zum Einführen in eine feststehende Öse (24, 50) eingerichtet ist, die jeweils mit dem zweiten Schließelement (14) oder dem ersten Schließelement (12) verbunden ist.

9. Spanneinrichtung nach Anspruch 8, **dadurch gekennzeichnet, dass** das Element (23) in einer im Wesentlichen orthogonal auf die Bewegungsachse des ersten Betätigungselementes (27) ausgerichteten Stellung angeordnet ist.

10. Spanneinrichtung nach Anspruch 8, **dadurch gekennzeichnet, dass** das Element (123) in einer im Wesentlichen parallel zu der Bewegungsachse des ersten Betätigungselementes (127) ausgerichteten Stellung angeordnet ist.

11. Spanneinrichtung nach einem der Ansprüche 1 bis 7, **dadurch gekennzeichnet, dass** die Befestigungsmittel eine Öse (224) aufweisen, die an dem ersten Betätigungselement ausgebildet und zum Zusammenwirken mit einem feststehenden Befestigungselement (223) eingerichtet ist, das jeweils mit dem ersten Schließelement (12) oder dem zweiten Schließelement (14) verbunden ist.

## Revendications

1. Dispositif de serrage destiné à serrer de manière sélective un premier élément de fermeture (12) sur un second élément de fermeture (14), comprenant des moyens de fixation (23) mobiles entre une position de serrage et une position de dégagement sous l'action de moyens d'entraînement actionnables manuellement, **caractérisé en ce que** lesdits moyens d'entraînement comprennent au moins un premier élément d'entraînement (27) associé auxdits moyens de fixation (23) et installé à l'intérieur d'un logement d'encastrement (20) associé audit premier (12) ou second (14) élément de fermeture, **en ce que** ledit premier élément d'entraînement (27) est axialement mobile à l'intérieur dudit logement d'encastrement (20) entre une première position fermée, à laquelle correspond ladite position de serrage desdits moyens de fixation (23), et une position ouverte, à laquelle correspond ladite position de dégagement desdits moyens de fixation (23), ou vice versa, et **en ce que** des premiers moyens élastiques (32) sont prévus dans le but d'exercer une poussée axiale sur ledit premier élément d'entraînement (27) pour le pousser en permanence vers ladite position ouverte.

2. Dispositif de serrage selon la revendication 1, **caractérisé en ce que** ledit logement d'encastrement (20) possède au moins une ouverture capable de permettre l'émergence au moins partielle dudit premier élément d'entraînement (27) dans ladite position ouverte, et **en ce que** ledit premier élément d'entraînement comprend un bouton (27) qui sort dudit logement d'encastrement (20) dans ladite position ouverte et se trouve à l'intérieur dudit logement d'encastrement (20) dans ladite position fermée.

3. Dispositif de serrage selon la revendication 1 ou 2, **caractérisé en ce que** lesdits moyens d'entraînement comprennent un second élément d'entraînement (30, 42) relié audit premier élément d'entraînement (27) et capable de commander le déplacement dudit premier élément d'entraînement (27) de ladite position fermée vers ladite position ouverte ou vice versa.

4. Dispositif de serrage selon la revendication 3, **caractérisé en ce que** ledit logement d'encastrement (20) est traversant et traverse ledit premier (12) ou ledit second (14) élément de fermeture, et possède une seconde ouverture capable de donner accès audit second élément d'entraînement (30).

5. Dispositif de serrage selon la revendication 3 ou 4, **caractérisé en ce que** ledit second élément d'entraînement comprend une tige de commande (30) dotée de moyens d'arrêt (34) aptes à coopérer avec un élément opposé fixe (40), ladite tige de commande (30) étant mobile entre une première position, dans laquelle lesdits moyens d'arrêt (34) maintiennent ledit premier élément d'entraînement (27) de façon stable dans ladite position fermée en contrant l'action desdits premiers moyens élastiques (32), et une seconde position, dans laquelle lesdits moyens d'arrêt (34) sont libres de toute contrainte vis-à-vis dudit élément opposé (40), ce qui permet le déplacement dudit premier élément d'entraînement (27) vers ladite position ouverte.

6. Dispositif de serrage selon la revendication 5, **caractérisé en ce que** la position dudit élément opposé (40) peut être réglée de manière sélective afin d'ajuster la course axiale dudit premier élément d'entraînement (27).

7. Dispositif de serrage selon la revendication 3, **caractérisé en ce que** ledit second élément d'entraînement comprend un bouton (42) apte à coopérer avec des seconds moyens élastiques (44) et mobile entre une première position inactive, dans laquelle il peut contraindre ledit premier élément d'entraînement (27) dans ladite position fermée, et une position opérationnelle, dans laquelle il peut être appuyé contre lesdits seconds moyens élastiques (44) en libérant la contrainte vis-à-vis dudit premier élément d'entraînement (27).

8. Dispositif de serrage selon l'une quelconque des revendications ci-dessus, **caractérisé en ce que** lesdits moyens de fixation comprennent un élément (23, 123) associé audit premier élément d'entraînement (27, 127) et pouvant être inséré dans un oeillet fixe (24, 50) associé respectivement audit second (14) ou audit premier (12) élément de fermeture.

9. Dispositif de serrage selon la revendication 8, **caractérisé en ce que** ledit élément (23) est disposé dans une position sensiblement perpendiculaire à l'axe de déplacement dudit premier élément d'entraînement (27).

10. Dispositif de serrage selon la revendication 8, **caractérisé en ce que** ledit élément (123) est disposé dans une position sensiblement parallèle à l'axe de déplacement dudit premier élément d'entraînement (127).

11. Dispositif de serrage selon l'une quelconque des revendications 1 à 7 incluse, **caractérisé en ce que** lesdits moyens de fixation comprennent un oeillet (224) ménagé dans ledit premier élément d'entraînement et capable de coopérer avec un élément de fixation fixe (223) associé respectivement audit premier (12) ou audit second (14) élément de fermeture.
